# EUROPEAN PATENT APPLICATION

(11) **EP 2 107 451 A2**
(43) Date of publication of application: **07.10.2009**
(21) Application number: 09155579.7
(22) Date of filing: 19.03.2009
(51) Int. Cl.: G06F 3/12

(54) **Work form management method and host apparatus to manage work form**

(30) Priority: 01.04.2008 KR 20080030341
(71) Applicant: Samsung Electronics Co., Ltd., Suwon-si, Gyeonggi-do (KR)
(72) Inventor: Park, Seong-il, Gyeonggi-do (KR)
(74) Representative: Walaski, Jan Filip

(57) **Abstract**

A host device to manage a work form includes a communication unit of a server communicates with a plurality of image forming apparatuses connected via a network, a collecting unit collects information on conditions of the plurality of image forming apparatuses, a work form management unit modifies a work form to which an operation provided by the plurality of image forming apparatus is set using the collected condition information, and a storage unit stores the modified work form.

## Description

The present general inventive concept relates to a work form management method and a host apparatus to manage a work form and more particularly to a work form management method to collect information regarding conditions of all of image forming apparatuses connected to a network and a host apparatus to manage a work form.

With the development of networks, a plurality of user terminals may share a plurality of image forming apparatuses, and a user may use any of the plurality of image forming apparatuses to perform image forming operations.

To achieve this, the user accesses a web server, and writes a work form to manage operations provided by the plurality of image forming apparatuses. More specifically, the user receives a work form from a server connected to one of the plurality of image forming apparatuses, selects a desired operation from a plurality of operations included in the work form, and requests the corresponding operation.

However, the above process is disadvantageous, in that information on the conditions of the respective image forming apparatuses used when the work form transmitted from the server is written differ from those of the currently used image forming apparatuses. For example, five image forming apparatuses may be connected to a network when a user writes a work form, so a user writes a work form using the five image forming apparatuses, whereas only three image forming apparatuses may be connected to the network after the work form is written.

In this case, the work form cannot provide up-to-date information on the conditions of the respective image forming apparatuses, so the user may not be able to determine the conditions of the image forming apparatuses, potentially causing the operation to fail. If the work form selected by a user is for an image forming apparatus which is unavailable, the operation will not be executed, and the user must request other operations using the work form, or edit the work form to use other image forming apparatuses.

The present general inventive concept provides a work form management method, a host device to manage a work form, a work form management method of an image forming apparatus, and a work form management system, in which information regarding conditions of all of the image forming apparatuses connected to a network is collected, and the condition information is applied to a prewritten work form, so that a user may be able to use more accurate work forms and information regarding conditions of image forming apparatuses

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing a work form management method, including collecting information on conditions of at least one image forming apparatus connected via a network, modifying a work form on which an operation provided by the at least one image forming apparatus is set using the collected condition information, and storing the modified work form.

The operation of modifying may include at least one operation of updating the work form using the collected condition information, and writing a new work form by applying the collected condition information to the work form.

The collecting information operation may include at least one operation of sending an inquiring to the at least one image forming apparatus, and collecting the changed condition information by a host device to manage the work form, and transmitting and collecting the changed condition information, if the at least one image forming apparatus detects that the condition information has changed.

The host device to manage the work form periodically may send an inquiry to the at least one image forming apparatus to check whether the changed condition information exists.

The modified work form may be stored in at least one of the host device to write and manage the work form, the at least one image forming apparatus, and a user terminal.

The method may further include displaying the changed condition information among the collected condition information and an image forming apparatus of which the condition information is changed.

The method may further include displaying the stored work form, if the at least one image forming apparatus requires that the work form is displayed.

The condition information may include information on the connection with the at least one image forming apparatus and the network, whether printing of the image forming apparatus is enabled, and a waiting time for a printing job of the image forming apparatus.

The foregoing and/or other aspects and utilities of the present general inventive concept may also be achieved by providing a host device to manage a work form, the host device including a communication unit to communicate with at least one image forming apparatus through a network, a collecting unit to collect information on conditions of the at least one image forming apparatus, a work management unit to modify a work form on which an operation corresponding to the at least one image forming apparatus is set using the collected condition information, and a storage unit to store the modified work form.

The work form management unit may use at least one of a method to update the work form using the collected condition information, and a method to write a new work form by applying the collected condition information to the network.

The collecting unit may employ at least one of a method to send an inquiry to the at least one image forming apparatus through the communication unit in order to collect the changed condition information, and a method to collect the changed condition information provided from an image forming apparatus of which condition information has changed.

The stored work form may be stored in the at least one image forming apparatus.

The device may further include a display to display the changed condition information among the collected condition information and an image forming apparatus of which the condition information has changed.

The device may further include a control unit to control the communication unit to transmit the stored work form to the at least one image forming apparatus, if the at least one image forming apparatus requires that the work form be displayed.

The foregoing and/or other aspects and utilities of the present general inventive concept may also be achieved by providing a work form management method of an image forming apparatus which stores a work form to which an operation corresponding to at least one image forming apparatus is set, including monitoring a condition of the at least one image forming apparatus, and modifying the work form by applying information of changed conditions to the work form, if a detection is made that the conditions of the at least one image forming apparatus have changed.

The method may further include transmitting the modified work form from the at least one image forming apparatus to the other image forming apparatus connected to a network.

These and/or other aspects and utilities of the present general inventive concept will become apparent and more readily appreciated from the following description of the embodiments, taken in conjunction with the accompanying drawings, of which:
FIG. 1 is a view illustrating a work form management system according to an embodiment of a present general invention concept;
FIG. 2 is a block diagram illustrating the host device of FIG. 1 according to an exemplary embodiment of the present general invention concept;
FIG. 3 is a view illustrating an example of a work form;
FIG. 4 is a view illustrating a list of usable image forming apparatuses among image forming apparatuses connected to a network;
FIG. 5 is a view illustrating a list of usable image forming apparatuses which has been changed according to condition information collected by the collector of FIG. 2;
FIG. 6 is a view illustrating a work list included in a work form selected by a user according to a present general inventive concept;
FIG. 7 is a block diagram illustrating the first MFP of FIG. 1;
FIG. 8 is a view illustrating an example of an error message generated by a work form management unit when performing a selected operation is possible;
FIG. 9 is a flowchart provided to explain a method of managing a work form;
FIG. 10 is a flowchart illustrating an exemplary embodiment of the present general inventive concept, in which a host device collects information regarding a condition of an image forming apparatus to modify a work form;
FIG. 11 is a flowchart illustrating an exemplary embodiment of the present general inventive concept, in which a modified work form is provided to an image forming apparatus logged into a host device; and
FIGS. 12 and 13 are flowcharts illustrating a method to manage a work form of an image forming apparatus according to an exemplary embodiment of the present general inventive concept.

Reference will now be made in detail to embodiments of the present general inventive concept, examples of which are illustrated in the accompanying drawings, wherein like reference numerals refer to like elements throughout. The embodiments are described below in order to explain the present general inventive concept by referring to the figures.

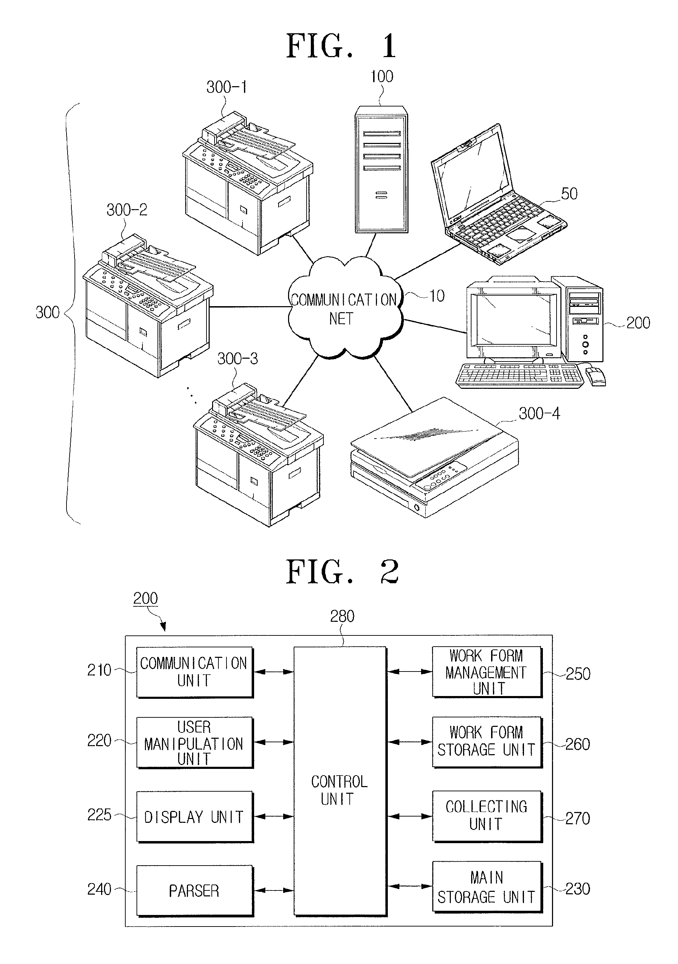

FIG. 1 is a view illustrating a work form management system according to an exemplary embodiment of the present general inventive concept.

Referring to FIG. 1, a work form management system according to an exemplary embodiment of the present general inventive concept may include a plurality of user terminals 50, a host device 200, a server 100, and a plurality of image forming apparatuses 300.

The user terminal 50 may be a personal computer, a personal digital assistant (PDA), or a laptop computer capable of communicating by wire or wirelessly. If a work form management solution is installed to the host device 200, a user logs into the host device 200 using the user terminal 50, or logs into the host device 200 directly. The user writes a work form, or edits a prewritten work form using a user interface (UI).

The user may generate or edit a work form to manage operations supported by the plurality of image forming apparatuses 300 using a work form management solution installed on the user terminal 50.

A work form includes information required to perform operations which the image forming apparatuses 300 provide. For example, the work form includes various information regarding operations made by a user, devices to perform operations, the process of performing operations, operation conditions, positions in which result data of the operations are stored, or the like. If a user uses the stored work form, the user selects one of the prewritten work forms, and the operation corresponding to the selected work form is automatically performed, thus the user does not need to endure an inconvenience of setting the operation conditions whenever performing operations using the image forming apparatuses 300.

The server 100 stores user's login information such as an identification (ID) or password pre-registered to access the server 100, and a plurality of work forms set for each of the users on the network, and provides a work form management solution to write a work form.

The host device 200 is a device to communicate by wire or wirelessly, such as a personal computer, a PDA, or a laptop computer, on which a work form management solution is installed. If a user logs into the host device 200 using the user terminal 50 or the image forming apparatus 300, the host device 200 authenticates the user based on the information stored in the server 100. The host device 200 enables the authenticated user to write or edit a work form using the work form management solution. The host device 200 uses markup languages such as Extensible Markup Language (XML) to write a work form responding to a user command.

The image forming apparatus 300 supports a program enabling the communication between the user terminal 50 and the server 100, between the user terminal 50 and the image forming apparatus 300, or between the server 100 and the image forming apparatus 300, and may include various devices, for example first to third multifunctional peripherals (MFPs) 300-1, 300-2, 300-3, a scanner 300-4, a printer (not illustrated), a fax machine (not illustrated), or a copy machine (not illustrated).

If the image forming apparatus 300 receives the work form selected by a user from the server 100, the image forming apparatus 300 displays the received work form, and executes an operation selected from among operations capable of being conducted by the work form. If the user selects operation 'Scan to print' from the operations of the work form displayed on the first MFP 300-1, the first MFP 300-1 transmits digital data obtained by scanning a document to the second MFP 300-2 via a network 10, and the second MFP 300-2 prints the digital data on a printing medium.

The network 10 may be constructed using cables connecting general parallel ports, cables connecting universal serial buses (USBs), an internet by a hub and a local area internet (LAN), or a wireless network.

FIG. 2 is a block diagram illustrating the host device of FIG. 1 according to an exemplary embodiment of the present general invention concept.

Referring to FIGS. 1 and 2, the host device 200 may include a communication unit 210, a user manipulation unit 220, a display unit 225, a main storage unit 230, a parser 240, a work form management unit 250, a work form storage unit 260, a collecting unit 270, and a control unit 280.

The host device 200 provides the display unit 225, the user terminal 50, or the image forming apparatuses 300 with a user interface (UI) screen on which a user may write a work form. The host device 200 collects information regarding the condition of the image forming apparatus 300, automatically modify the work form, and provides the user terminal 50 or the image forming apparatus 300 with the modified work form.

The communication unit 210 is connected to the user terminal 50, the server 100, and the image forming apparatuses 300 via the network 10 to communicate therewith. If a user enters his or her login information using the user manipulation unit 220, the communication unit 210 communicates with the server 100 to authenticate the user.

The user manipulation unit 220 may be a user interface such as a keyboard or mouse, and may output signals to select and request functions supported by the host device 200. The user writes and edits a work form by manipulating the user manipulation unit 220.

The display unit 225 displays a work form screen provided from the work form management unit 250 when the user manipulation unit 220 requests to drive a solution to write a work form. If the condition information regarding at least one of the plurality of image forming apparatuses 300 is changed, the display unit 225 displays the changed condition information and the identifier of the changed image forming apparatus.

The main storage unit 230 stores data required to write a work form, identifiers of the image forming apparatuses 300 connected to the network 10, and condition information of the image forming apparatuses 300. The condition information may include various information of the image forming apparatuses 300-1, 300-2, 300-3, 300-4, such as whether printing is currently enabled, an amount of toner remaining, a connection status with the network 10, or a waiting time for a printing job. The condition information is included in a work form, and displayed on a UI.

The main storage unit 230 stores programs, operating systems, and work form management solutions required to operate the host device 200, programs to drive the work form management solutions, programs to parse UI data to be explained, and various data generated while the host device 200 is being operated. The work form management solution is a program which writes a work form, recognizes the condition information of the image forming apparatuses 300, and writes a list requesting the condition information (hereinbelow, simply referred to as a "request list").

The main storage unit 230 stores a plurality of items to write the request list. The request list includes items to determine conditions of the respective image forming apparatuses 300, and the conditions refer to responses to the list items to determine the current conditions of the image forming apparatuses 300. For example, the request list may include whether printing is currently enabled, an amount of toner remaining for each color, communication conditions, and the waiting time for printing jobs.

The parser 240 parses UI data to write and edit a work form stored in the main storage unit 230, if a user inputs commands to write and edit the work form. The command to write and edit a work form may be input by the user terminal 50 or the image forming apparatuses 300.

The work form management unit 250 drives the stored work form management solution to write or edit the work form according to the user commands. The work form management unit 250 creates an initial screen (not illustrated) to write a work form according to the parsed result, a work form list screen mapped by a user, a work form screen selected from the work form list by a user, and writes the work form responding to the user's operation on the created screen.

The work form management unit 250 writes a work form including a list of operations written by a user and a list of the image forming apparatuses 300 connected to the network 10. The written work form is transmitted to the user terminal 50 or the image forming apparatuses 300, and is displayed or stored on the user terminal 50 or the image forming apparatuses 300.

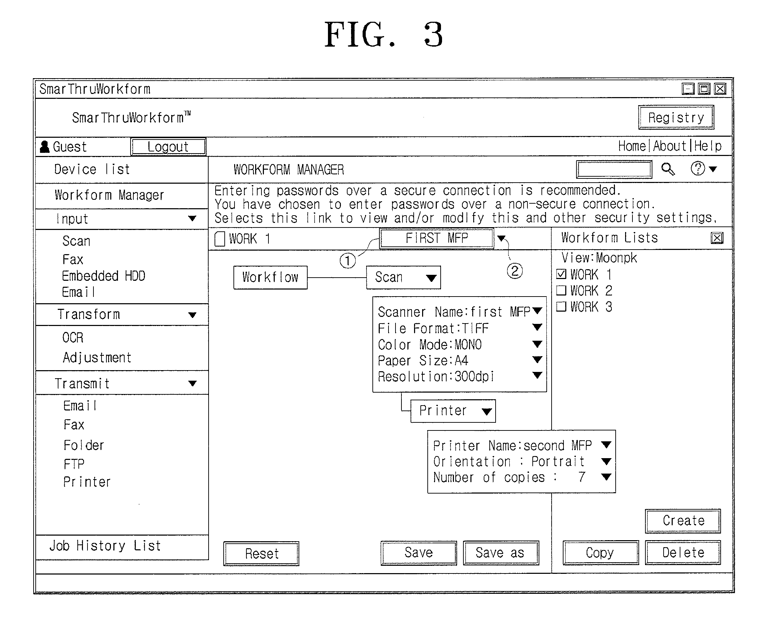

The work form may be created in a form of a file, and may be represented as a screen as illustrated in FIG. 3. Referring to FIG. 3, the user having ID 'Guest' writes a work form including three operations, namely 'WORK 1,' 'WORK 2,' and 'WORK 3,' and detailed operations of 'WORK 1' are displayed on a screen. The operation 'WORK 1' provides a scan-to-print workflow. The first MFP 300-1 scans a document, and the second MFP 300-2 prints the scanned document. The workflow depicts a sequence of operations.

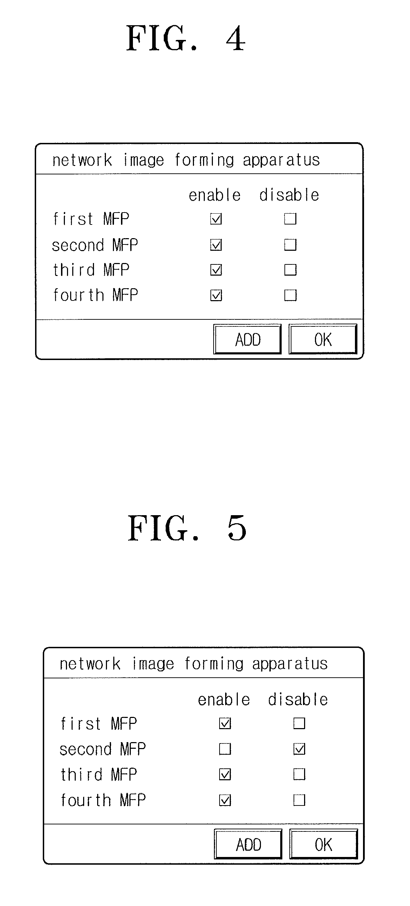

A list of the image forming apparatuses 300 is displayed on an area ① of the work form. If a user clicks a button ▼ indicated by numeral ②, the work form displays a list of currently available apparatuses among the image forming apparatuses 300 connected to the network 10 as illustrated in FIG. 4. In FIG. 4, the first to fourth MFPs 300-1, 300-2, 300-3, 300-4 are available.

If a user clicks an add button illustrated in FIG. 4, detailed condition information of the MFPs 300-1, 300-2, 300-3, 300-4 is displayed. The condition information is displayed according to the condition information stored in the main storage unit 230, and is changed according to the information collected in the collecting unit 270. The buttons ▼ of FIG. 3 are used to select and change devices to scan and print a document.

The work form storage unit 260 maps the work form which is written or edited by the work form management unit 250 for each user, and stores the mapped work form. The plurality of work forms may be written and stored separately for each users. The stored work form is transmitted to a device where the user is logged in, for example the user terminal 50 or the image forming apparatus 300, and the user edits the work form using a UI of the transmitted work form, or requests to perform operations.

The collecting unit 270 collects the information regarding the condition of the image forming apparatus 300, and outputs the condition information to the main storage unit 230 and the work management unit 250. The collecting unit 270 may write a request list for each of the image forming apparatuses 300-1, 300-2, 300-3, 300-4, or write the same request list for the image forming apparatuses 300-1, 300-2, 300-3, 300-4. For example, if a mono scanner 300-4 is provided as an image forming apparatus, the request list may not include a list item indicating the amount of toner remaining for each color. Once the request list is written, the request list may be stored in the main storage unit 230 to be used later.

The condition information may be collected, when the host device 200 requests that the condition information of the image forming apparatus 300 is collected, or when the image forming apparatus 300 reports the condition information.

When the host device 200 requests that the image forming apparatus 300 collects the condition information, the collecting unit 270 inquires about the image forming apparatus 300 of the changed condition information through the communication unit 210, and collects the changed condition information. The above operation may be performed using the Simple Network Management Protocol (SNMP) or other protocols. The collecting unit 270 writes a request list using a plurality of items stored in the main storage unit 230.

More specifically, when the host device 200 is turned on, or after expiry of a predetermined period, the collecting unit 270 transmits the request list to the image forming apparatus 300 through the communication unit 210, and receives a response list to the request list from the image forming apparatus. The collecting unit 270 parses the response list to collect the condition information for items of the image forming apparatuses 300-1, 300-2, 300-3, 300-4.

When the image forming apparatus 300 reports the condition information, the collecting unit 270 collects the changed condition information from the image forming apparatuses 300, which detect that the condition information has changed. The image forming apparatus 300 preliminarily stores the request list, periodically checks the condition information, and writes a list for responding to the condition information, or if a detection is made that the condition of the image forming apparatus 300 has changed, the image forming apparatus 300 provides the collecting unit 270 of the host device 200 with the changed condition information through the network 10.

The work form management unit 250 detects the changed condition information by comparing the collected condition information and the condition information of the image forming apparatuses 300-1, 300-2, 300-2, 300-4 stored in the main storage unit 230, or detects the changed condition information from the condition information which each of the image forming apparatuses 300-1, 300-2, 300-3, 300-4 collects and records without receiving a command, and applies the changed condition information to a prewritten work form. That is, the work form management unit 250 automatically modifies the prewritten work form using the changed condition information. For example, the work form management unit 250 updates a work form by changing the condition information included in the prewritten work form, or writes a new work form by applying the changed condition information to the prewritten work form.

More specifically, the main storage unit 230 stores the collected condition information for each of the image forming apparatuses 300-1, 300-2, 300-3, 300-4, and the work form management unit 250 modifies a work form by including content that any of the image forming apparatuses 300-1, 300-2, 300-3, 300-4 are unavailable in the work form. For example, if a determination is made that the second MFP 300-2 is unavailable, the work form management unit 250 determines that the second MFP 300-2 is impossible to operate, and modifies a work form which is preliminarily written to be operated by the second MFP 300-2. The modification of the work form refers to operations that are divided into operations that are enabled and operations that are disabled, and the work form file is updated or a new work form file is created.

According to an exemplary embodiment of the present general inventive concept, if 'WORK 1' and 'WORK 2' from among 'WORK 1,' 'WORK 2,' and 'WORK 3' illustrated in FIG. 3 cause the second MFP 300-2 to be operated, the work form management unit 250 determines that 'WORK 1' and 'WORK 2' cannot operate, deletes 'WORK 1' and 'WORK 2' from the work form list, updates an original work form, and stores the original work form in the work form storage unit 260.

According to an exemplary embodiment of the present general inventive concept, if 'WORK 1' and 'WORK 2' from among 'WORK 1,' 'WORK 2,' and 'WORK 3' illustrated in FIG. 3 cause the second MFP 300-2 to be operated, the work form management unit 250 determines that 'WORK 1' and 'WORK 2' cannot operate, deletes 'WORK 1' and 'WORK 2' from the work form list, generates a new work form (A), and stores the new work form in the work form storage unit 260. If the work form file needs to be modified according to the condition information collected for a predetermined time period, the work form management unit 250 updates the original work form to generate a new work form (B), and deletes the new work form (A) previously generated. The prewritten original work form and the new work form (B) are stored in the work storage unit 260, and the new work form (A) is not stored in the work form storage unit 260.

The updated work form or the new work form (A or B) is mapped for respective users, and stored in the work form storage unit 260, or transmitted to the user terminal 50 and the image forming apparatus 300.

The work form management unit 250 updates the list of currently usable image forming apparatuses 300 using the collected condition information. An exemplary embodiment of the present general inventive concept will be explained with reference to FIGS. 4 and 5. A list of image forming apparatuses 300 initially connected to the network 10 is included in a work form file, stored in the work form storage unit 260, and displayed on a work form screen of FIG. 4.
<value> HP Color LaserJet 4650 PCL 5c</value> ... first MFP (300-1)
<value> HP Color LaserJet 4650 PS </value> ... second MFP (300-2)
<value> Samsung SCX-6x45 Series PS </value> ... third MFP (300-3)

If a determination is made that the second MFP 300-2 is impossible to be used from the condition information collected by the collecting unit 270, the work form management unit 250 changes part of the work file as follows, updates the original work form or writes a new work form, and displays a list of the image forming apparatuses 300 on a work form screen, as illustrated in FIG. 5.
<value> HP Color LaserJet 4650 PCL 5c</value> ... first MFP (300-1)
<value> Samsung SCX-6x45 Series PS </value> ... third MFP (300-3)

This is because the work form management unit 250 determines that the second MFP 300-2 is disabled based on the information "toner empty" or "out of order" included in the response list of the second MFP 300-2. If the collecting unit 270 cannot collect the response list from the second MFP 300-2, the work form management unit 250 determines that the second MFP 300-2 is turned off or is not connected to the network 10, and thus using the second MFP 300-2 by a user is impossible.

If a determination is made that the second MFP 300-2 can be used based on the information collected by the collecting unit 270 after a predetermined time has elapsed, the work form file is changed to the original work form so that a list of the image forming apparatuses 300 is displayed on a work form screen of FIG. 4. If a new work form and the original work form are stored in the work form storage unit 260, the new work form is deleted from the work form storage unit 260.
<value> HP Color LaserJet 4650 PCL 5c</value> ... first MFP (300-1)
<value> HP Color LaserJet 4650 PS </value> ... second MFP (300-2)
<value> Samsung SCX-6x45 Series PS </value> ... third MFP (300-3)

In doing so, if a work form screen is displayed as illustrated in FIG. 3, and a button ▼ indicated by numeral ② is clicked, the work form management unit 250 causes the currently usable image forming apparatuses 300 to be displayed as illustrated in FIG. 4.

The control unit 280 controls overall operations of the host device 200 using various programs. The control unit 280 executes a work form management solution, and controls the collecting unit 270 to collect the condition information from the image forming apparatuses 300. The control unit 280 controls the work form management unit 250 to modify a prewritten work form based on the condition information collected by the collecting unit 270, and controls the work form storage unit 260 to store the modified work form.

The control unit 280 controls the communication unit 210 to transmit a modified work form to the image forming apparatus 300 or the user terminal 50 whenever the prewritten work form is modified. When the work form is written or modified, the written or modified work form is transmitted to the image forming apparatus 300 or the user terminal 50 according to a user option, and is stored therein.

If a user logs into one of the image forming apparatuses 300, for example the first MFP 300-1, and requests that a work form be displayed, the control unit 280 retrieves a work form list mapped to the user from the work form storage unit 260, and controls the communication unit 210 to transmit the work form list to the first MFP 300-1. If the user selects a desired work form from the work form list displayed on the first MFP 300-1, the control unit 280 retrieves the selected work form from the work form storage unit 260, and controls the communication unit 210 to transmit the retrieved work form to the first MFP 300-1.

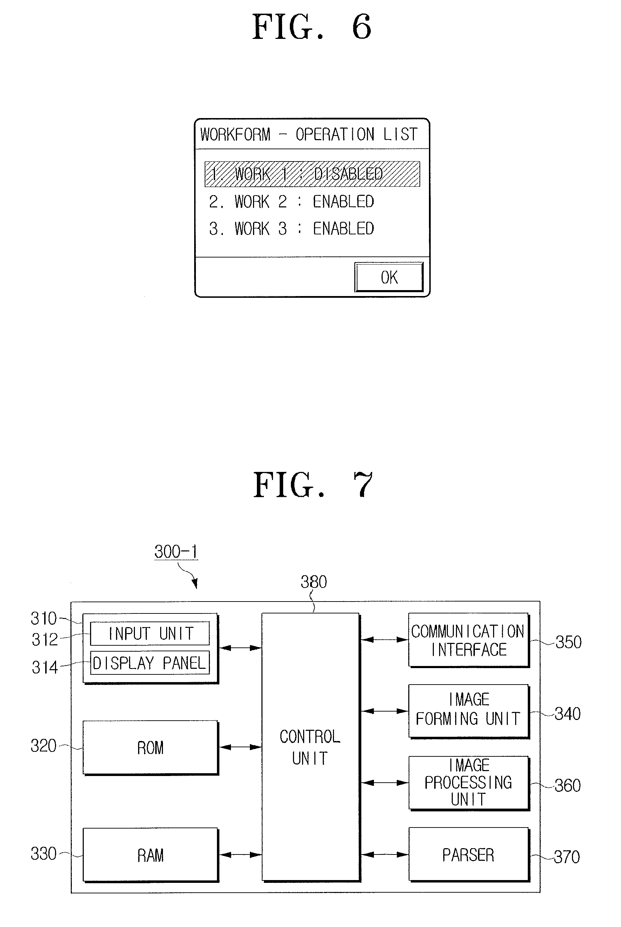

For example, if the selected work form includes operations 'WORK 1,' 'WORK 2,' and 'WORK 3' as illustrated in FIG. 3, the work form management unit 250 writes an operation list including 'WORK 1,' 'WORK 2,' and 'WORK 3,' and a work form illustrating an availability of each operation as illustrated in FIG. 6, and transmits the written operation list and the work form to the first MFP 300-1. That is, the work form management unit 250 determines the availability of the operations using the condition information of the image forming apparatuses 300-1, 300-2, 300-3, 300-4 collected by the collecting unit 270. If a detection is made that the second MFP 300-2 is disabled, and 'WORK 1' includes a workflow which causes the second MFP 300-2 to perform a printing job, the work form management unit 250 determines that 'WORK 1' is unavailable, writes a work form of FIG. 6, and transmits the written work form to the first MFP 300-1.

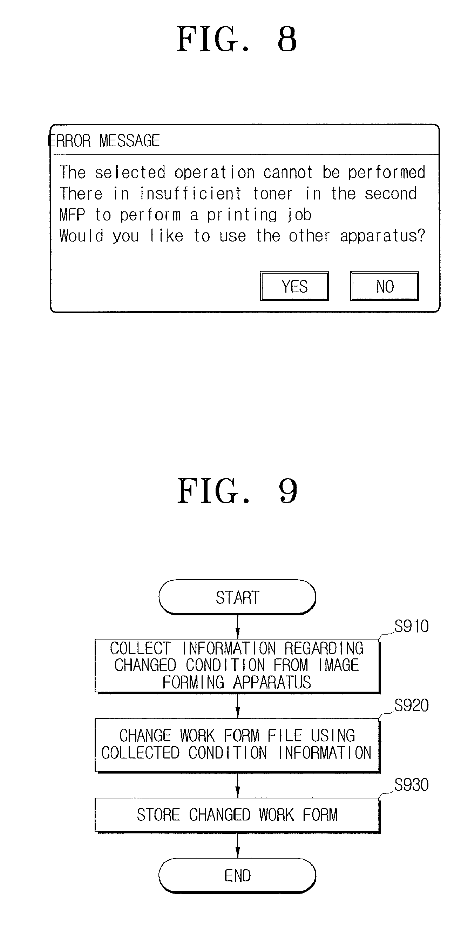

If a user selects 'WORK 1' from a work form displayed on the first MFP 300-1 illustrated in FIG. 6, the work form management unit 250 generates an error message as illustrated in FIG. 8, and transmits the error message to the first MFP 300-1. Accordingly, the user is able to know the reason that 'WORK 1' is unavailable. If a user selects an OK button on the error message of FIG. 8, the work form management unit 250 provides a UI as illustrated in FIG. 5, and enables a user to select another image forming apparatus, for example the MFP 300-3. The identification information of the selected image forming apparatus 300-3 is temporarily applied to a work form, or continuously stored.

The work form management unit 250 writes a work form by a filtering or ordering operation. When the work form management unit 250 uses filtering, unavailable image forming apparatuses are deleted from a list of the image forming apparatuses as described above with reference to FIGS. 4 and 5. When the work form management unit 250 uses ordering, available image forming apparatuses are arranged in order of waiting time when the UI is written as illustrated in FIG. 5. The above manner may be set when a user writes a work form.

FIG. 7 is a block diagram illustrating the first MFP 300-1 of FIG. 1.

Referring to FIG. 7, the first MFP 300-1 may include an operation panel unit 310, a read only memory (ROM) 320, a random access memory (RAM) 330, an image forming unit 340, a communication interface 350, an image processing unit 360, a parser 370, and a control unit 380. The image forming apparatuses 300-2, 300-3, 300-4 are similar to those of FIG. 7 and thus a detailed description will be omitted.

The operation panel unit 310 includes an input unit 312 and a display panel 314. The input unit 312 outputs a signal to operate functions supported by the first MFP 300-1 to the control unit 380, and includes various function keys and a touch screen. The display panel 314 displays the condition of the first MFP 300-1 under the control of the control unit 380, and displays a work form received from the host device 200, and changed condition information. For example, the display panel 314 displays a message as illustrated in FIGS. 6 and 8.

The ROM 320 stores various programs required to drive the first MFP 300-1, programs required to parse a response list, programs required to parse a work form transmitted from the host device 200, and a work form transmitted from the host device 200. The RAM 330 stores various data generated when the first MFP 300-1 is operated.

The image forming unit 340 generates image data of a document. For example, if the image forming unit 340 includes a scanner (not illustrated), a printing engine unit (not illustrated), and a modem (not illustrated), the image forming unit 340 executes operations such as scanning, printing, copying, or faxing a document.

The communication interface 350 is connected to the host device 200 via the network 10 in order to communicate therewith, and supports an interface between the first MFP 300-1 and the other image forming apparatuses 300-2, 300-3, 300-4. To achieve this, the communication interface 350 may be embodied as a network interface card. For example, the first MFP 300-1 transmits data scanned by the image forming unit 340 to another device, for example the image forming apparatus 300-2, and causes the image forming apparatus 300-2 to print the data.

The communication interface 350 outputs various screens transmitted from the host device 200 to the image processing unit 360. The image processing unit 360 processes the various screens, which may include a login screen, a work form screen illustrated in FIG. 6, or an error message illustrated in FIG. 8 so that the screens may be displayed.

The communication interface 350 receives a request list from the host device 200, outputs the received list to the parser 200, and transmits a response list written by the control unit 380 to the host device 200. The response list includes respondence to the plurality of items included in the request list.

The parser 370 parses the request list received through the communication interface 350, and outputs the parsed result to the control unit 380. The parsed request list includes a plurality of list items required to determine the availability of the first MFP 300-1.

The control unit 380 controls overall operations of the first MFP 300-1 according to the control programs stored in the ROM 320. The control unit 380 determines the condition of the first MFP 300-1 based on the plurality of list items acquired by parsing the list, responds to the items, and writes a response list. The control unit 380 writes the response list using a markup language such as XML, and transmits the written response list to the host device 200 via the communication interface 350 and the network 10.

The control unit 380 determines the condition of the first MFP 300-1 periodically, and writes the response list to provide to the host device 200 even when the control unit 380 does not receive the request list from the host device 200. Whenever the control unit 380 recognizes that the condition of the first MFP 300-1 has changed, the control unit 380 writes the changed condition information in a transmittable format, and provides the host device 200 with the information.

If a work form screen is displayed on the display panel 314 as illustrated in FIG. 6, and 'WORK 2' is selected by the input unit 312, the control unit 380 controls the image processing unit 360 and the display panel 314 to display a workflow corresponding to 'WORK 2.' If the workflow of 'WORK 2' causes the first MFP 300-1 to scan a document, and causes the second MFP 300-2 to process optical character recognition (OCR), that is, to scan to OCR, the control unit 380 controls the image forming unit 340 to scan a document, and controls the communication interface 350 to transmits an OCR command and the scanned document to the second MFP 300-2. Accordingly, the second MFP 300-2 performs the OCR processing for the document scanned by the first MFP 300-1.

FIG. 9 is a flowchart illustrating a work form management method. Referring to FIGS. 1 to 9, in operation S910, the collecting unit 270 collects the information regarding the changed condition from the image forming apparatus 300. The collecting unit 270 periodically contacts the image forming apparatus 300 to collect the condition information, or collects the condition information transmitted by the image forming apparatus 300.

In operation S920, the work form management unit 250 determines the changed condition information among the collected condition information, and applies the changed condition information to the prewritten work form. For example, if a determination is made that the first MFP 300-1 has changed to an unusable condition, the work form management unit 250 deletes the first MFP 300-1 from the list of usable image forming apparatuses, and modifies the work form.

In operation S930, the work form storage unit 260 stores the work form modified in operation S920 as a file.

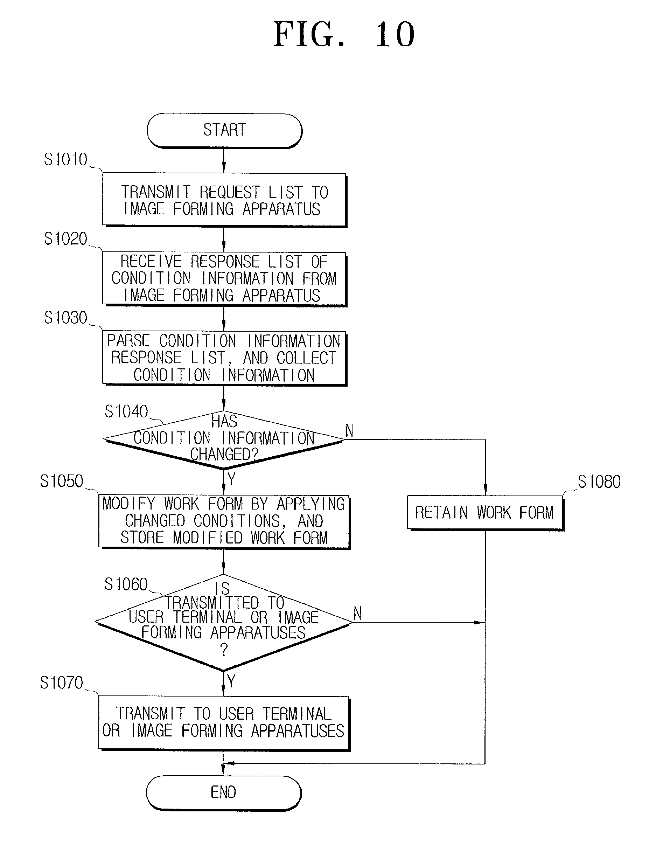

FIG. 10 is a flowchart illustrating an exemplary embodiment of the present general inventive concept, in which a host device collects information regarding the condition of an image forming apparatus to modify a work form.

Referring to FIGS. 1 to 8, and 10, in operation S1010, the communication unit 210 of the host device 200 transmits a request list written by the collecting unit 270 to the image forming apparatuses 300-1, 300-2, 300-3, 300-4. If a response list is received from the image forming apparatuses 300-1, 300-2, 300-3, 300-4, in operation S1020, the collecting unit 270 parses the response list, and collects the condition information for each item in operation S1030.

In operation S1040, the work form management unit 250 compares the collected condition information with the condition information previously stored in the main storage unit 230 to determine if the condition information for the image forming apparatuses 300-1, 300-2, 300-3, 300-4 has changed. In operation S1050, the work form management unit 250 modifies the work form by applying the changed conditions to the prewritten work form, and stores the modified work form in the work form storage unit 260.

In operation S1060, if a command is set to a register so that the modified work form is transmitted to the user terminal 50 or the image forming apparatuses 300 whenever the work form is modified, in operation S1070, the control unit 280 controls the communication unit 210 to transmit the modified work form as a file. In doing so, the user terminal 50 or the image forming apparatuses 300 may store the modified work form.

In operation 1080, the work form management unit 250 retains the previous work form if a determination is not made that the condition information has changed in operation S1040.

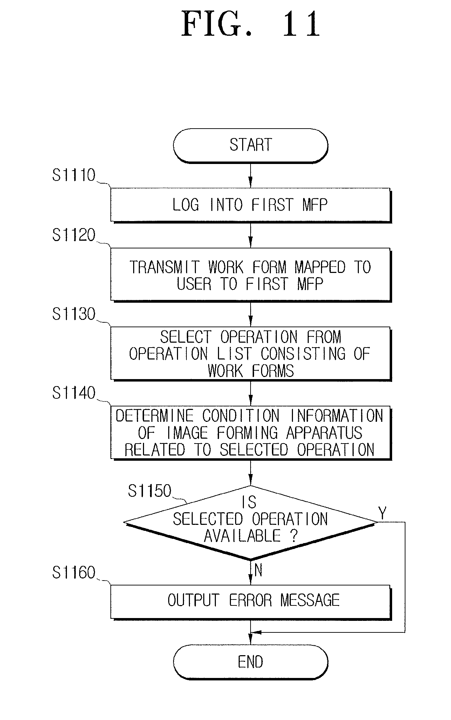

FIG. 11 is a flowchart provided to explain an exemplary embodiment of the present general inventive concept, in which a modified work form is provided to an image forming apparatus logged into a host device.

Referring to FIGS. 1 to 8, and 11, in operation S1110, if a user logs into the host device 200 using the first MFP 300-1, and the user is completely authenticated, in operation S1120, the host device 200 retrieves a work form which is mapped to the user from the work form storage unit 260, and transmits the retrieved work form to the first MFP 300-1.

If an operation is selected from an operation list including work forms transmitted to the first MFP 300-1, for example 'WORK 1,' in operation S1130, the work form management unit 250 determines the condition information of the image forming apparatus, for example the second MFP, related to the selected operation in operation S1140.

If a determination is made that the selected operation is unavailable in operation S1150, the work form management unit 250 generates an error message as illustrated in FIG. 8, and the communication unit 210 transmits the error message to the first MFP 300-1 in operation S1160. For example, if a determination is made that the operation selected in operation S1130 follows a workflow that the second MFP 300-2 prints, and a determination is made that the second MFP 300-2 is unavailable in operation S1140, the work form management unit 250 determines that the selected operation is impossible to be operated, and generates an error message, which is displayed on the display panel 314 of the first MFP 300-1.

As described above, the host device 200 periodically requests the image forming apparatus 300 to collect the changed condition information, or collects the changed condition information from the image forming apparatuses 300 whenever the condition information changes and applies the collected condition information to the prewritten work form. The host device 200 promptly and accurately determines if the conditions of the image forming apparatus 300 have been changed, and applies the changed condition information to the work form. The user can thus avoid requesting an operation using a work form having incorrect information.

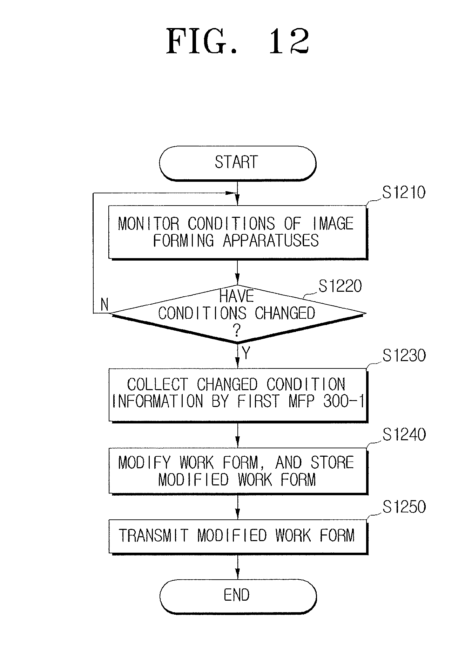

FIG. 12 is a flowchart illustrating a work form management method of an image forming apparatus according to an exemplary embodiment of the present general inventive concept.

Referring to FIG. 12, one of the plurality of the image forming apparatuses 300, for example the first MFP 300-1, stores work forms to which operations corresponding to the respective image forming apparatuses 300-1, 300-2, 300-3 are set. In operation S1210, the image forming apparatuses 300-1, 300-2, 300-3 periodically monitors respective conditions thereof to determine if the conditions of the image forming apparatuses 300-1, 300-2, 300-3 have changed, or to receive information from each component, such as a toner, indicating that the conditions have changed.

If a determination is made in operation S1220 that the conditions have changed in operation S1210, the information regarding the changed condition is collected by the first MFP 300-1 in operation S1230. For example, if the first MFP 300-1 determines that the conditions have changed while monitoring a condition thereof, the first MFP 300-1 collects the changed condition information, and if the second MFP 300-2 determines that the condition information has changed, the second MFP 300-2 transmits the changed condition information to the first MFP 300-1.

In operation S1240, the first MFP 300-1 modifies a work form by applying the condition information collected in operation S1230 to the stored work form, and stores the modified work form, and in operation S1250, the first MFP 300-1 transmits the modified work form to the other image forming apparatuses 300-2, 300-3.

The first MFP 300-1 may display the condition information collected in operation S1230, and notify a user of the condition information. The above operations may be conducted at the user's request.

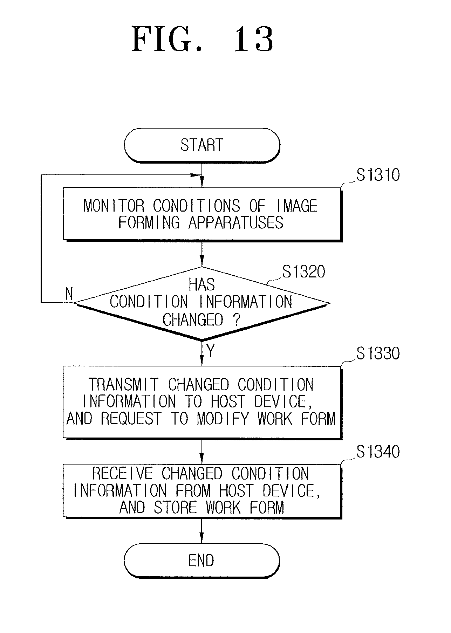

FIG. 13 is a flowchart illustrating a method to manage a work form of an image forming apparatus according to an exemplary embodiment of the present general inventive concept.

Referring to FIG. 13, in operation S1310, each of the image forming apparatuses 300-1, 300-2, 300-3 periodically monitors a condition thereof, or receives information on the condition of each component, such as a toner.

If a determination is made in operation S1320 that the condition information has changed in operation S1310, the image forming apparatus for which the condition information has changed, for example the first MFP 300-1, transmits the changed condition information and the identification information to the host device 200, and requests that the first MFP 300-1 modifies a work form by applying the changed condition information in operation S1330.

The host device 200 modifies a prewritten work form based on the changed condition information and the identification information. In operation S1340, each of the image forming apparatuses 300-1, 300-2, 300-3 receives the modified work form from the host device 200 after a predetermined time has elapsed, and stores the work form.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RANI), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

According to a method to manage a work form, a host device to manage a work form according to exemplary embodiments of the present general inventive concept, the host device or image forming apparatuses collect information regarding the conditions of the image forming apparatuses connected to a network, and apply any changed condition information to a prewritten work form. A recently modified work form is provided to a user, and thus the user may request the operations using a more accurate work form. Accordingly, the number of failures during the operation is reduced, and the conditions of the image forming apparatus can be easily determined using a work form.

Although various embodiments of the present general inventive concept have been illustrated and described, it will be appreciated by those skilled in the art that changes may be made in these embodiments without departing from the principles and of the general inventive concept, the scope of which is defined in the appended claims.

## Claims

1. A work form management method, comprising :
collecting information on conditions of at least one image forming apparatus connected via a network;
modifying a work form on which an operation provided by the at least one image forming apparatus is set using the collected condition information; and
storing the modified work form.

2. The method of claim 1, wherein the modifying operation comprises at least one of:
updating the work form using the collected condition information; and
writing a new work form by applying the collected condition information to the work form.

3. The method of claim 1, wherein the collecting information operation comprises at least one of:
sending an inquiring to the at least one image forming apparatus, and
collecting the changed condition information by a host device to manage the work form; and
transmitting and collecting the changed condition information, if the at least one image forming apparatus detects that the condition information has changed.

4. The method of claim 3, wherein the host device to manage the work form periodically sends an inquiry to the at least one image forming apparatus to check whether the changed condition information exists.

5. The method of claim 1, wherein the modified work form is stored in at least one of the host device to write and manage the work form, the at least one image forming apparatus, and a user terminal.

6. The method of claim 1, further comprising:
displaying the changed condition information among the collected condition information and an image forming apparatus of which the condition information is changed.

7. The method of claim 1, further comprising:
displaying the stored work form, if the at least one image forming apparatus requires that the work form is displayed.

8. The method of claim 1, wherein the condition information comprises information on the connection with the at least one image forming apparatus and the network, whether printing of the image forming apparatus is enabled, and a waiting time for a printing job of the image forming apparatus.

9. A host device to manage a work form, the host device comprising:
a communication unit to communicate with at least one image forming apparatus through a network;
a collecting unit to collect information on conditions of the at least one image forming apparatus;
a work management unit to modify a work form on which an operation corresponding to the at least one image forming apparatus is set using the collected condition information; and
a storage unit to store the modified work form.

10. The device of claim 9, wherein the work form management unit uses at least one of a method to update the work form using the collected condition information, and a method to write a new work form by applying the collected condition information to the work form.

11. The device of claim 9, wherein the collecting unit employs at least one of a method to send an inquiry to the at least one image forming apparatus through the communication unit in order to collect the changed condition information, and a method to collect the changed condition information provided from an image forming apparatus of which condition information has changed.

12. The device of claim 9, wherein the stored work form is stored in the at least one image forming apparatus.

13. The device of claim 9, further comprising:
a display to display the changed condition information among the collected condition information and an image forming apparatus of which the condition information has changed.

14. The device of claim 9, further comprising:
a control unit to control the communication unit to transmit the stored work form to the at least one image forming apparatus, if the at least one image forming apparatus requires that the work form be displayed.
